# EUROPÄISCHE PATENTSCHRIFT

(11) **EP 3 749 554 B1**
(45) Veröffentlichungstag und Bekanntmachung des Hinweises auf die Patenterteilung: **28.07.2021**
(21) Anmeldenummer: 19703281.6
(22) Anmeldetag: 31.01.2019
(51) Int. Cl.: B60S 3/04

(54) **FROSTSCHUTZVORRICHTUNG UND FROSTSCHUTZVERFAHREN FÜR EINE FAHRZEUG-BEHANDLUNGSANLAGE**
FREEZING PROTECTION DEVICE AND FREEZING PROTECTION METHOD FOR A VEHICLE TREATMENT SYSTEM
DISPOSITIF ANTIGEL ET PROCÉDÉ ANTIGEL POUR UNE INSTALLATION DE TRAITEMENT DE VEHICULES

(30) Priorität: 09.02.2018 DE 102018102938
(43) Veröffentlichungstag der Anmeldung: 16.12.2020
(73) Patentinhaber: WashTec Holding GmbH, 86153 Augsburg (DE)
(72) Erfinder: STEININGER, Franz, 86424 Dinkelscherben (DE); MAYER, Stefan, 86356 Neusäß (DE)
(74) Vertreter: Reitstötter Kinzebach
(86) Internationale Anmeldenummer: PCT/EP2019/052427
(87) Internationale Veröffentlichungsnummer: WO 2019/154717

(56) Entgegenhaltungen:
- DE-A1- 2 441 383
- GB-A- 1 137 405
- NL-A- 8 200 872
- US-A- 3 276 628
- US-A- 4 327 866

## Beschreibung

Die vorliegende Erfindung betrifft eine Frostschutzvorrichtung für eine Fahrzeug-Behandlungsanlage. Die Frostschutzvorrichtung umfasst eine Fluidreservoir-Anordnung zur Aufnahme eines Fluids und eine Behandlungseinrichtung, welche eine Austrittsöffnung für das Fluid aufweist. Weiterhin umfasst die Frostschutzvorrichtung eine erste Leitung, welche eine Fluidverbindung von der Fluidreservoir-Anordnung in einer Durchflussrichtung zu der Austrittsöffnung bereitstellt, und eine erste Pumpe, mittels welcher das Fluid in einem Betriebsmodus mit einem ersten Druck von der Fluidreservoir-Anordnung in die erste Leitung förderbar ist. Zudem umfasst die Frostschutzvorrichtung eine zweite Leitung, welche eine Fluidverbindung von der Fluidreservoir-Anordnung zu einem austrittsöffnungsseitigen Abschnitt der ersten Leitung bereitstellt, wobei in der zweiten Leitung ein erstes Sperrelement angeordnet ist, und einer zweiten Pumpe, mittels welcher das Fluid mit einem zweiten Druck in die zweite Leitung förderbar ist.

Es sind mehrere Verfahren bekannt, mit welchen Selbstbedienungswaschanlagen bei Temperaturen unterhalb des Gefrierpunktes vor dem Einfrieren geschützt werden können. Eines dieser Verfahren umfasst das Entleeren der Hauptleitung der Anlage. Dies wird insbesondere dann ausgeführt, wenn eine Selbstbedienungs-Waschanlage für Fahrzeuge für längere Zeit in den Frostschutzbetrieb versetzt werden soll. Hierzu muss Pressluft für die Entleerung bereitgestellt werden. Zudem muss entweder die Anlage für die Zeit des Entleerens das in den Leitungen befindliche Fluid gezielt ablassen oder die Entleerung der Anlage muss manuell durchgeführt werden. Hierdurch werden separate Arbeitsschritte benötigt, durch welche Betriebskosten entstehen.

Weiterhin ist ein Verfahren bekannt, bei dem die Leitungen mit Frostschutzmittel gefüllt werden. Auch dieses Verfahren wird hauptsächlich dann verwendet, wenn die Selbstbedienungs-Anlage für längere Zeit in den Frostschutzbetrieb versetzt werden soll. Nachteilig an diesem Verfahren ist, dass die Leitungen der Anlage mit Frostschutzmittel gefüllt werden müssen, welches bei Umschalten in den Waschbetrieb aus den Leitungen gespült werden muss und somit verloren geht. Zudem muss das in den Leitungen der Anlage befindliche Wasser während dem Befüllen der Leitungen mit Frostschutzmittel gezielt abgelassen werden.

Für ein häufiges oder schnelles Umschalten zwischen Waschbetrieb und Frostschutzbetrieb ist ein Verfahren bekannt, bei dem ein geringer Wasserfluss im Frostschutzbetrieb aufrechterhalten wird. Hierzu wird Wasser mit geringem Druck kontinuierlich durch die Leitung gepumpt. Um den Fluss aufrechtzuerhalten, wird ein Waschelement verwendet, bei welchem Wasser definiert austritt. Ein solches System wird auch "Weep-System" genannt. Nachteilig an diesem Verfahren ist, dass an dem Waschelement kontinuierlich Wasser austritt. Bei Unachtsamkeit des Benutzers, wird dieser nass. Zudem wird für das Nachspeisen von verloren gegangenem Fluid Wasser aus dem Leitungsnetz verwendet. Dadurch entsteht ein hoher Frischwasserverbrauch, welcher wiederum zu hohen Betriebskosten führt. Es ist bekannt, das verwendete Wasser in einem Kreislauf zu führen, bei welchem aus dem Waschelement austretendes Wasser in einem Speicher aufgefangen wird. Das Wasser aus dem Speicher wird wiederum weiter gepumpt, um dann über eine Druckerhöhungspumpe durch die Leitung wieder zum Waschelement befördert zu werden. Der Aufbau dieser Konstellation ist aufwendig und benötigt viel Bauraum. Insbesondere sind die Pumpen über mehrere Fluidspeicher verteilt, so dass eine Wartung des Systems aufwendig ist.

In der US 4,327,866 A ist eine Selbstbedienungsanlage beschrieben, deren Hauptleitung mit einem Weep-System gegen das Einfrieren geschützt wird. Bei der Waschanlage gibt es eine Hauptleitung, über welche unter Hochdruck Waschmittel ausgestoßen wird. Zum Ausstoßen von Zusatzmitteln, die aus Kostengründen nicht unter Hochdruck ausgestoßen werden sollen, ist eine Zusatzleitung verlegt. Diese Leitung wird unabhängig von der Hauptleitung vor dem Einfrieren geschützt. Hierfür wird ein geschlossener Kreislauf mit einer gesonderten Rückführleitung für das Zusatzmittel vorgesehen.

Die US 4,327,866 A beschreibt eine Frostschutzvorrichtung nach dem Oberbegriff des Anspruchs 1.

In dem Frostschutzsystem, welches in der GB 1 137 405 A beschrieben ist, werden die Hauptleitungen der Anlagen zum Frostschutz entleert.

Die US 3 276 628 A beschreibt bei einer Waschanlage, dass nach dem Waschvorgang Druckluft die verbliebene Flüssigkeit in der Flüssigkeitsleitung verdrängt.

Bei dem Frostschutzsystem der NL 8 200 872 A wird ein Warmluftstrom durch die Kanäle der Anlage geblasen, die von der Hochdruck-Wasserpumpe gespeist werden, um etwaige Wasseransammlungen zu entfernen und die Temperatur dieser Kanäle über den Gefrierpunkt anzuheben.

Es ist die Aufgabe der vorliegenden Erfindung, eine Vorrichtung und ein Verfahren bereitzustellen, welche es ermöglichen, eine Fahrzeug-Behandlungsanlage kostengünstig und bauraumsparend in einem Frostschutzbetrieb zu betreiben.

Diese Aufgabe wird erfindungsgemäß durch eine Frostschutzvorrichtung mit den Merkmalen des Anspruchs 1 und einem Frostschutzverfahren mit den Merkmalen des Anspruchs 12 gelöst. Vorteilhafte Ausgestaltungen und Weiterbildungen ergeben sich aus den abhängigen Ansprüchen.

Die erfindungsgemäße Frostschutzvorrichtung ist dadurch gekennzeichnet, dass das erste Sperrelement derart ausgestaltet ist, dass es in einem Frostschutzmodus, in welchem der zweite Druck größer ist als der erste Druck, geöffnet ist, so dass das Fluid aus der zweiten Leitung in die erste Leitung eintritt und zumindest teilweise durch die erste Leitung entgegengesetzt zu der Durchflussrichtung in die Fluidreservoir-Anordnung rückführbar ist.

Dabei kann die Fluidreservoir-Anordnung ein oder mehrere Fluidreservoirs umfassen. Umfasst die Fluidreservoir-Anordnung lediglich ein Fluidreservoir, wird das Fluid im Frostschutzmodus in dasselbe Fluidreservoir zurückgeführt, aus dem es im Betriebsmodus in die erste Leitung gepumpt wird. Umfasst die Fluidreservoir-Anordnung mehrere Fluidreservoire, kann das Fluid im Betriebsmodus in die erste Leitung aus einem ersten Fluidreservoir gepumpt werden und im Frostschutzmodus von der ersten Leitung in das erste Fluidreservoir zurückgeführt werden. Die zweite Leitung wiederum kann das Fluid aus einem zweiten Fluidreservoir beziehen. Zwei FluidReservoire sind insbesondere dann vorteilhaft, wenn mehrere Waschplätze über die gleiche zweite Leitung Fluid für den Frostschutzmodus beziehen. Hierdurch kann dann das Fluid für die zweite Leitung für jeden Waschplatz aus dem gleichen zweiten Fluidreservoir bezogen werden, während für den Betriebsmodus jeder Waschplatz ein eigenes erstes Fluidreservoir aufweist.

Im Frostschutzmodus wird ein geschlossener Fluidkreislauf erzeugt, bei dem die zweite Pumpe stetig Fluid aus dem Fluidreservoir in die zweite Leitung pumpt. Über die erste Leitung wird das Fluid entgegen der Durchflussrichtung wieder in die Fluidreservoir-Anordnung zurückgeführt. Durch einen solchen geschlossenen Kreislauf kann der Fluidverlust im Frostschutzmodus gering gehalten werden. Zudem kann das Fluid wiederverwendet werden. Werden zwei Fluidreservoire verwendet, wird vor der Wiederverwendung das Fluid aus dem zweiten Fluidreservoir dem ersten Fluidreservoir zugeführt. Wird lediglich ein Fluidreservoir verwendet, kann das Fluid vorteilhafterweise sofort wiederverwendet werden. Durch den geringen Fluidverlust und die Wiederverwendung des Fluides können die Betriebskosten für den Frostschutzmodus vorteilhafterweise gering gehalten werden.

Die erste Leitung weist dabei den austrittsöffnungsseitigen Abschnitt auf. Dieser ist in Durchflussrichtung in der hinteren Hälfte der ersten Leitung angeordnet. Dies bedeutet, dass sich der austrittsöffnungsseitige Abschnitt näher an der Austrittsöffnung der Behandlungseinrichtung als an dem Fluidreservoir befindet, in welche die erste Leitung eingeführt wird, um daraus das Fluid zu beziehen.

Die Fahrzeug-Behandlungsanlage ist dabei beispielsweise eine Selbstbedienungs-Waschanlage, bei welcher ein Nutzer sein Fahrzeug selbst mittels Bedienung der Behandlungseinrichtung wäscht. Der Betriebsmodus ist dann insbesondere ein Waschmodus, bei welchem an den Austrittsöffnungen der Behandlungseinrichtung, beispielsweise einer Waschbürste und/oder einer Handlanze, ein Waschfluid austritt.

Im Waschmodus ist der erste Druck größer als der zweite Druck. Die erste Pumpe pumpt das Fluid im Waschmodus insbesondere unter Hochdruck in die erste Leitung. Die erste Leitung ist die sogenannte Hauptleitung des Systems. Die Hauptleitung ist bei Hochdruckwäsche eine Hochdruckleitung. Der erste Druck liegt für die Hochdruckwäsche dabei beispielsweise in einem Bereich von 25 bis 350 bar. Bei einer Vorwäsche mit einer Waschbürste liegt der erste Druck beispielsweise in einem Bereich von 5 bis 35 bar. Bei Beendigung des Waschmodus wird kein Fluid mehr mittels der ersten Pumpe in die erste Leitung gepumpt. Der im Waschmodus an der Hauptleitung anliegende erste Druck liegt dann nicht mehr an der Hauptleitung an.

Die zweite Leitung ist eine Nebenleitung, die beispielsweise parallel zur Hauptleitung verlegt wird. Die zweite Pumpe pumpt das Fluid insbesondere unter Niederdruck in die Nebenleitung. Die Nebenleitung ist daher eine Niederdruckleitung. Der zweite Druck liegt beispielsweise in einem Bereich von 0,5 bis 4 bar. Dabei kann die Niederdruckleitung lediglich im Frostschutzmodus von dem Fluid durchströmt werden. Vorteilhaft ist es, wenn in die Niederdruckleitung sowohl im Waschmodus als auch im Frostschutzmodus Fluid gepumpt wird. Bei einer Beendigung des Waschmodus kann dann sofort in den Frostschutzmodus gewechselt werden, ohne dass darauf gewartet werden muss, dass Fluid aus der Fluidreservoir-Anordnung entlang der Nebenleitung zu der Hauptleitung gepumpt wird. Versorgt die zweite Leitung mehrere Waschplätze einer Waschanlage mit Fluid für den Frostschutzmodus, können alle Frostschutzkreise mit Druckerhöhungseinheiten ausgestattet sein, um zu gewährleisten, dass bei jedem Waschplatz Fluid mit einem ausreichenden Niederdruck für den Frostschutzmodus ankommt.

In einer Ausgestaltung weist die Frostschutzvorrichtung eine Zuflussstelle bei dem austrittsöffnungsseitigen Abschnitt der ersten Leitung auf, bei welcher im Frostschutzmodus das Fluid aus der zweiten Leitung in die erste Leitung strömt. Das erste Sperrelement ist benachbart zu der Zuflussstelle angeordnet und derart ausgestaltet, dass es in dem Betriebsmodus, in dem der zweite Druck kleiner ist als der erste Druck, geschlossen ist, so dass das Fluid aus der ersten Leitung nicht in die zweite Leitung eintritt. Das erste Sperrelement kann dabei insbesondere direkt bei der Zuflussstelle in der zweiten Leitung angeordnet sein. Das erste Sperrelement ist beispielsweise weniger als 20 cm von der Zuflussstelle entfernt. Es kann daher die vorgesehene Menge an Fluid zur Fahrzeug-Behandlung zur Verfügung gestellt werden.

Weiterhin ist die Zuflussstelle in Durchflussrichtung insbesondere im hinteren Drittel der ersten Leitung angeordnet. Hierdurch kann gewährleistet werden, dass im Frostschutzmodus für einen großen Teil der ersten Leitung ein geschlossener Fluidkreislauf bereitgestellt werden kann. Insbesondere befindet sich die Zuflussstelle so nah wie möglich an der Austrittsöffnung der Behandlungseinrichtung.

Wenn die Behandlungseinrichtung als Handlanze ausgebildet ist, ist die Zuflussstelle insbesondere in der Handlanze, z. B. in einem Griffstück der Handlanze, angeordnet. Hierdurch kann der gesamte stromaufwärtiger Teil der Leitung von der Handlanze bis zur Fluidreservoir-Anordnung vor einem Einfrieren des Fluids geschützt werden. Der stromabwärtigen Teil der Leitung, d. h. der Teil der Leitung hinter der Zuflussstelle, welcher in diesem Fall zum Beispiel ein Auslaufrohr umfasst, kann, falls erforderlich, auf andere Weise vor einem Einfrieren geschützt werden. Beispielsweise kann dieses kurze Stück der Leitung durch eine Heizeinrichtung vor einem Einfrieren des Fluids geschützt werden. Alternativ kann die Handlanze so ausgebildet sein, dass Fluid aus dem stromabwärtigen Teil der Leitung hinter der Zuflussstelle auslaufen kann, sodass auch in diesem Teil der Leitung kein Fluid einfrieren kann.

In einer Ausgestaltung ist die Fluidreservoir-Anordnung gegenüber seiner Umgebung abgeschlossen. Die Fluidreservoir-Anordnung ist insbesondere staubdicht gegenüber seiner Umgebung abgeschlossen. Die Hauptleitung und die Niederdruckleitung können dann in die Fluidreservoir-Anordnung eingeführt werden, wobei dazu benötigte Öffnungen in der Fluidreservoir-Anordnung mit einer Dichtung gegenüber der Umwelt abgedichtet werden können. Hierdurch kann vorteilhafterweise verhindert werden, dass aus der Umwelt stammender Schmutz in das Fluid gelangt.

Außerdem kann das Fluid im Frostschutzmodus durch beide Leitungen in das Reservoir zurückgeführt werden. Auch hierdurch kann vorteilhafterweise verhindert werden, dass aus der Umwelt stammender Schmutz in das Fluid gelangt Auf diese Weise können ferner die Leitungen und Pumpen vor vorzeitiger Korrosion durch Schmutzablagerungen geschützt werden. Dadurch müssen die Leitungen und Pumpen seltener gewechselt werden, was zu niedrigeren Wartungskosten führt. Insbesondere kann verhindert werden, dass sich Keime aus der Umwelt in dem Fluid absetzen und sich dort vermehren. Dadurch wird verhindert, dass pathogene und fäkale Keime im Waschbetrieb in die Umwelt gelangen.

In einer weiteren Ausgestaltung ist das erste Sperrelement ein Rückschlagventil. Durch die Verwendung eines Rückschlagventils kann die Frostschutzvorrichtung besonders kostengünstig und bauraumsparend bereitgestellt werden. Dabei ist das Rückschlagventil derart in der zweiten Leitung verbaut, dass sich ein Ventilkörper des Rückschlagventils in Richtung der ersten Leitung öffnen kann. Im Betriebsmodus wird der Ventilkörper durch den erhöhten Druck in der ersten Leitung zugedrückt. Wird auch im Frostschutzmodus das Fluid in die zweite Leitung unter Niederdruck gepumpt, ist dieser Niederdruck zu gering, um den Ventilkörper des Rückschlagventils zu bewegen. Fällt der Hochdruck in der ersten Leitung durch Beendigung des Betriebsmodus weg, wird der Ventilkörper von dem unter Niederdruck stehenden Fluid in der zweiten Leitung automatisch vom Ventilsitz weg bewegt, so dass sich das Ventil öffnet. Das Fluid wird dann von der zweiten Leitung in die erste Leitung gedrückt. Das Fluid kann so im Frostschutzmodus zumindest teilweise entgegen der Durchflussrichtung der ersten Leitung in die Fluidreservoir-Anordnung rückgeführt werden. Alternativ kann das erste Sperrelement auch elektronisch gesteuert werden. Hierbei wird erfasst, wenn der erste Druck kleiner wird als der zweite Druck. Dass Sperrelement wird dann geöffnet.

In einer anderen Ausgestaltung ist in der ersten Leitung in Durchflussrichtung hinter der Zuflussstelle ein zweites Sperrelement angeordnet, welches im Frostschutzmodus geschlossen ist, so dass das Fluid nicht in einen in Durchflussrichtung hinter dem zweiten Sperrelement gelegenen Abschnitt der ersten Leitung eintritt. Das zweite Sperrelement kann dabei in das erste Sperrelement integriert sein, so dass das erste und das zweite Sperrelement ein einteiliges Sperrelement bilden. Das zweite Sperrelement kann dabei beispielsweise ein mechanisches Bauteil sein, dessen Position sich bei einem Wechsel von dem Betriebsmodus in den Frostschutzmodus derart verändert, dass es den Fluidfluss durch die erste Leitung zu den Austrittsöffnungen verhindert. Dabei kann das mechanische Bauteil verschiebbar oder klappbar ausgebildet sein. Beispielsweise kann der Ventilkörper des ersten Sperrelementes derart ausgebildet sein, dass es bei einer Öffnung des ersten Sperrelementes, d. h. zum Bespiel des Rückschlageventils, den Fluidfluss durch die erste Leitung in Richtung der Austrittsöffnung blockiert. Das erste und das zweite Sperrelement können auch in einer Baugruppe integriert sein.

Alternativ kann das zweite Sperrelement separat von dem ersten Sperrelement angeordnet sein. Es ist dabei beispielsweise als Absperrventil ausgestaltet. Die Zuflussstelle ist dabei insbesondere eine Mündung, bei der die Niederdruckleitung in die Hauptleitung mündet. An der Zuflussstelle sind die erste und die zweite Leitung miteinander verbunden. Die Verbindung kann dabei über ein Verbindungselement, welches beispielsweise das erste und/oder das zweite Sperrelement aufweist, vorgenommen werden.

Gemäß einer Ausgestaltung der Frostschutzvorrichtung ist die Zuflussstelle eine Mündung, bei der die zweite Leitung in die erste Leitung mündet und bei der die erste und die zweite Leitung mittels eines Verbindungselements miteinander verbunden sind. Das Verbindungselement kann das erste und das zweite Sperrelement aufweisen.

In einer Ausgestaltung wird das zweite Sperrelement dadurch bereitgestellt, dass ein Ventilkörper des ersten Sperrelementes bei einem Öffnen des ersten Sperrelementes den Fluidfluss durch die erste Leitung in Richtung der Austrittsöffnung blockiert. Hierdurch wird ein sehr kompakter und kostengünstiger Aufbau für das erste und zweite Sperrelement bereitgestellt.

Das Teil des Verbindungselementes, welches die erste Leitung aufnimmt, kann hierbei dann Teil der ersten Leitung sein, so dass auch in diesem Fall, das zweite Sperrelement in der ersten Leitung angeordnet ist. Ebenso kann das Teil des Verbindungselementes, welches die zweite Leitung aufnimmt, Teil der zweiten Leitung sein, so dass das Rückschlagventil in diesem Fall in der zweiten Leitung angeordnet ist. Durch diese Ausgestaltung kann ein stetiger Fluidfluss aus der Austrittsöffnung der Behandlungseinrichtung im Frostschutzmodus verhindert werden. Handelt es sich bei der Behandlungseinrichtung um eine Waschbürste einer Selbstbedienungs-Waschanlage, kann dadurch verhindert werden, dass im Frostschutzmodus Wasser aus dem Bürstenkopf tritt. Dadurch kann vorteilhafterweise sichergestellt werden, dass im Frostschutzmodus das gesamte aus der Niederdruckleitung in die Hauptdruckleitung strömende Fluid in die Fluidreservoir-Anordnung rückgeführt wird. Der Fluidverlust kann dadurch minimal gehalten werden. Weiterhin kann bei geschlossenem Absperrventil das Restwasser restlos aus dem Bürstenkopf herauslaufen. Ein Nachtropfen des Bürstenkopfes kann dadurch ebenfalls minimal gehalten werden. Die Wahrscheinlichkeit, dass ein nachfolgender Nutzer von Restwasser durchnässt wird, kann dadurch vorteilhafterweise reduziert werden.

Gemäß einer Ausgestaltung der erfindungsgemäßen Frostschutzvorrichtung weist die erste Leitung bei der ersten Pumpe eine Bypass-Leitung auf, durch welche das Fluid entgegengesetzt zu der Durchflussrichtung an der ersten Pumpe vorbei in die Fluidreservoir-Anordnung geleitet wird. In der Bypass-Leitung ist insbesondere ein weiteres Ventil angeordnet, dass im Betriebsmodus einen Fluidfluss von der stromaufwärtigen Seite der ersten Pumpe durch die Bypass-Leitung zurück in die Fluidreservoir-Anordnung verhindert.

Gemäß einer Weiterbildung der Frostschutzvorrichtung ist das weitere Ventil elektrisch betätigbar. Um auch im Fehlerfall den Frostschutz sicher zu stellen, wird in diesem Fall das weitere Ventil bevorzugt so ausgeführt, dass es im Normalzustand in einem geöffneten Zustand ist (NO(normally open)-Ventil). Im Betriebsmodus wird es dann elektrisch so angesteuert, dass es in den geschlossenen Zustand versetzt wird.

Gemäß einer anderen Weiterbildung der Frostschutzvorrichtung ist das weitere Ventil ein mechanisches Ventil. Es ist in diesem Fall somit rein mechanisch betätigbar. Das weitere Ventil weist einen Ventilkörper auf, durch dessen Bewegung das weitere Ventil in einen geöffneten und einen geschlossenen Zustand versetzbar ist. Im undurchströmten Zustand des weiteren Ventils wirkt auf dessen Ventilkörper durch eine Feder eine Kraft, welche den Ventilkörper in Richtung des geöffneten Zustands drückt. Im durchströmten Zustand des weiteren Ventils wird dessen Ventilkörper durch die Anströmung des Fluids in den geschlossenen Zustand versetzt, wenn der Volumenstrom einen Grenzwert überschreitet. Der Grenzwert wird dabei so gewählt, dass sich aus dem Volumenstrom der ersten Pumpe, sobald diese in Betrieb gesetzt wird, eine so starke Anströmung ergibt, dass das weitere Ventil in den geschlossenen Zustand versetzt wird. Im Frostschutzmodus ergibt sich hingegen durch die Förderung der zweiten Pumpe eine deutlich geringere Anströmung des Ventilkörpers des weiteren Ventils. Bei einem solchen Volumenstrom im Frostschutzmodus verbleibt das weitere Ventil im geöffneten Zustand. Beispielsweise ist der Volumenstrom im Frostschutzmodus etwa ein Zehntel des Volumenstroms im Betriebsmodus.

Weiterhin kann die Frostschutzvorrichtung eine Heizvorrichtung umfassen, mittels welcher das Fluid, welches die zweite Leitung durchströmt, erwärmbar ist. Dadurch kann die Wirkung des Frostschutzmodus vorteilhafterweise erhöht werden. Die Heizvorrichtung kann dabei beispielsweise bei der zweiten Pumpe angeordnet sein. Alternativ kann die Heizvorrichtung auch in Durchflussrichtung der zweiten Leitung vor oder hinter der zweiten Pumpe angeordnet sein. Weiterhin können in das Material der zweiten Leitung Heizdrähte eingearbeitet sein, welche es ermöglichen, dass das Fluid entlang der gesamten zweiten Leitung erwärmt wird. Weiterhin können die erste und die zweite Leitung thermisch gekoppelt sein und von ihrer Umgebung thermisch isoliert sein. Die beiden Leitungen können hierzu insbesondere derart aneinander befestigt werden, dass sie in physischem Kontakt zueinander stehen. Die thermische Kopplung ist insbesondere so ausgebildet, dass die Wärmeleitfähigkeit von einer der beiden Leitungen zu der anderen der beiden Leitungen größer ist als die Wärmeleitfähigkeit von der einen Leitung in die Umgebung. Die Wärmeleitung wird dabei nicht durch das Fluid bereitgestellt, welches von der einen Leitung zu der anderen Leitung fließt, sondern durch eine Wärmeleitung von dem Fluid und/oder dem Material der einen Leitung senkrecht zur Längsrichtung der Leitung zu dem Material der anderen Leitung. Bevorzugt verlaufen die erste und die zweite Leitung zumindest abschnittsweise im Wesentlichen parallel zueinander. In diesem Abschnitt sind die beiden Leitungen insbesondere so aneinander befestigt, dass die Wärmeleitfähigkeit von der einen der beiden Leitungen zu der anderen Leitung größer ist als die Wärmeleitfähigkeit für einen Energiefluss in die Umgebung.

Ferner sind gemäß einer Ausgestaltung die beiden Leitungen zumindest abschnittsweise so aneinander befestigt, dass beide Leitungen von einem wärmeisolierenden Material umgeben sind. In diesem Fall ist der Wärmefluss von einer Leitung zu der anderen Leitung, insbesondere in Querrichtung zur Längserstreckung der Leitungen, größer, insbesondere wesentlich größer, als der Wärmefluss in die Umgebung.

Eine Angleichung der Temperaturen der beiden Leitungen ist dann besonders einfach zu erreichen. Insbesondere kann bei einer Erwärmung des Fluides in der zweiten Leitung die erste Leitung miterwärmt werden, und zwar nicht durch einen Fluidfluss sondern durch Wärmeleitung. Um die Leitungen von ihrer Umgebung thermisch zu isolieren, können die Leitungen mit einem thermisch isolierenden Material umgeben sein. Hierdurch kann vorteilhafterweise die Temperatur der beiden Leitungen auch bei stark schwankenden Außentemperaturen im Wesentlichen konstant gehalten werden.

Die Erfindung betrifft ferner ein Frostschutzverfahren für eine Fahrzeug-Behandlungsanlage. Bei dem erfindungsgemäßen Verfahren wird in einem Betriebsmodus ein Fluid aus einer Fluidreservoir-Anordnung durch eine erste Leitung in eine Durchflussrichtung zu einer Austrittsöffnung einer Behandlungseinrichtung mit einem ersten Druck gepumpt. Das erfindungsgemäße Frostschutzverfahren ist dadurch gekennzeichnet, dass in einem Frostschutzmodus der erste Druck verringert wird und das Fluid aus der Fluidreservoir-Anordnung in eine zweite Leitung mit einem zweiten Druck, der größer als der verringerte erste Druck ist, gepumpt wird. Dabei tritt das Fluid von der zweiten Leitung durch ein in der zweiten Leitung angeordnetes Sperrelement bei einem austrittsöffnungsseitigen Abschnitt der ersten Leitung in diese ein. Weiterhin wird das Fluid zumindest teilweise entgegengesetzt zu der Durchflussrichtung durch die erste Leitung in die Fluidreservoir-Anordnung rückgeführt, wobei das Sperrelement öffnet, wenn der zweite Druck größer ist als der erste Druck. Dies beschreibt insbesondere einen Wechsel der Fahrzeug-Behandlungsanlage von dem Betriebsmodus in den Frostschutzmodus. Das erfindungsgemäße Frostschutzverfahren kann dabei insbesondere von der erfindungsgemäßen Frostschutzvorrichtung ausgeführt werden und weist daher alle Vorteile der Frostschutzvorrichtung auf.

Dabei ist der erste Druck im Betriebsmodus insbesondere höher als der zweite Druck. Der erste Druck kann dabei ein Hochdruck und der zweite Druck ein Niederdruck sein.

Weiterhin kann bei einem Wechsel von dem Frostschutzmodus in den Betriebsmodus der erste Druck wieder erhöht werden, wobei das Sperrelement schließt, wenn der erste Druck größer ist als der zweite Druck. Dadurch, dass das Sperrelement bereits beim Wechsel der Betriebsmodi geschlossen wird, wird es ermöglicht, dass im Betriebsmodus so viel Fluidvolumen wie möglich zur Austrittsöffnung transportiert wird. Bei dem Sperrelement handelt es sich insbesondere um das Rückschlagventil.

In einer Ausgestaltung wird im Frostschutzmodus beim Rückführen des Fluids das Fluid entgegengesetzt zu der Durchflussrichtung über eine Bypass-Leitung an der ersten Pumpe vorbei in die Fluidreservoir-Anordnung (4) geleitet wird.

In einer weiteren Ausgestaltung blockiert beim Öffnen des ersten Sperrelementes ein Ventilkörper des ersten Sperrelementes den Fluidfluss durch die erste Leitung in Richtung der Austrittsöffnungen.

Die Erfindung wird nun anhand von Ausführungsbeispielen mit Bezug zu den beigefügten Zeichnungen erläutert.
- Figur 1: zeigt ein Ausführungsbeispiel der erfindungsgemäßen Vorrichtung im Betriebsmodus, und
- Figur 2: zeigt die erfindungsgemäße Vorrichtung im Frostschutzmodus.

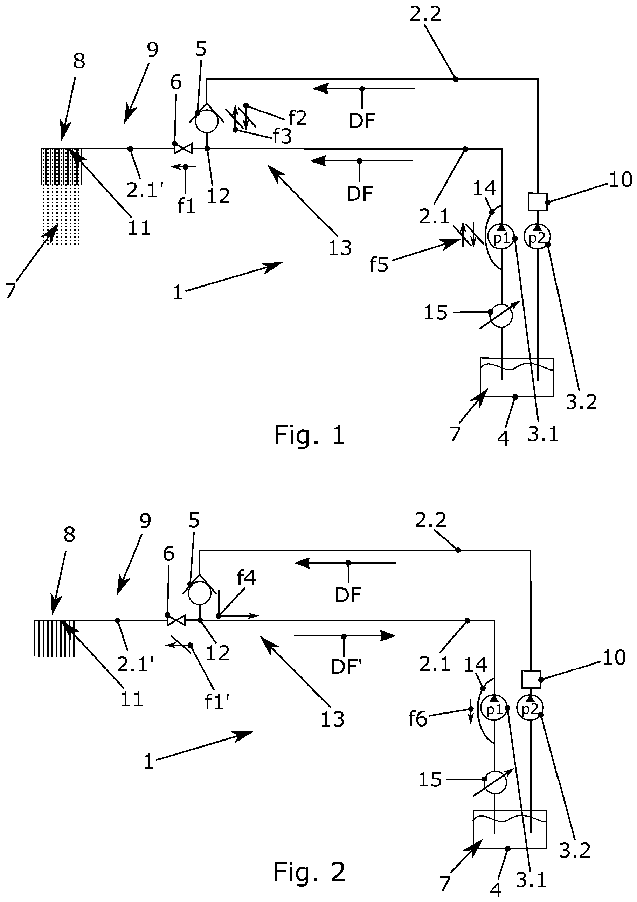

Mit Bezug zu den Figuren 1 und 2 wird ein Ausführungsbeispiel für die erfindungsgemäße Frostschutzvorrichtung 1 für eine Selbstbedienungs-Fahrzeugbehandlungsanlage erläutert. Weiterhin wird mit Bezug zu den Figuren 1 und 2 gleichzeitig ein Ausführungsbeispiel für das erfindungsgemäße Forstschutzverfahren erläutert.

Bei der Fahrzeug-Behandlungsanlage handelt es sich dabei im vorliegenden Beispiel um eine Selbstbedienungs-Waschanlage, die in einem Betriebsmodus und einem Frostschutzmodus betrieben werden kann. Der Betriebsmodus ist dabei ein Waschmodus, in welchem das Fahrzeug gewaschen werden kann. Dabei ist in Figur 1 der Betrieb der Fahrzeug-Behandlungsanlage im Waschmodus und in Figur 2 im Frostschutzmodus gezeigt.

Die erfindungsgemäße Frostschutzvorrichtung 1 umfasst eine Fluidreservoir-Anordnung 4, die im aufgeführten Beispiel ein Fluidreservoir aufweist, in welches ein Fluid 7 eingefüllt ist, das zum Waschen eines Fahrzeugs geeignet ist. Das Fluidreservoir 4 ist dabei abgeschlossen. Dies bedeutet, dass das Fluid 7 in dem Fluidreservoir 4 von äußeren Umwelteinflüssen abgeschottet ist, so dass keine Kontaminierungen durch Umwelteinflüsse wie Tierfäkalien, z. B. von der Fahrzeugwäsche, oder sonstige Verschmutzungen in das Fluid 7 gelangen können. Bei dem Fluidreservoir 4 handelt es sich beispielsweise um einen Wassertank. Dem Wasser 7 können dabei Chemikalien zugesetzt sein, welche zur Reinigung einer Fahrzeugoberfläche üblicherweise verwendet werden.

Weiterhin umfasst die Frostschutzvorrichtung 1 eine Behandlungseinrichtung 9. Die Behandlungseinrichtung 9 wird dabei von dem Nutzer in die Hand genommen und zur Reinigung des Fahrzeugs verwendet. Eine solche Behandlungseinrichtung 9 ist im vorliegenden Beispiel als Waschbürste ausgebildet, welche einen Bürstenhalter und einen Bürstenkopf 8 umfasst. Der Bürstenkopf 8 der Waschbürste weist dabei Austrittsöffnungen 11 auf, bei welchen das dem Bürstenkopf 8 zugeführte Wasser 7 austreten kann.

Die Frostschutzvorrichtung 1 umfasst weiterhin zwei Leitungen 2.1 und 2.2. Dabei stellt die Leitung 2.1 die Hauptleitung dar, durch welche das Waschwasser 7 im Betriebsmodus, also im Waschmodus, zum Reinigen des Fahrzeugs zu dem Bürstenkopf 8 gepumpt wird. Dabei wird das Waschwasser 7 durch eine Pumpe 3.1, an welcher die Hauptleitung 2.1 bei dem Wassertank 4 angeschlossen ist, in die Hauptleitung 2.1 gepumpt. Weiterhin ist die Hauptleitung 2.1 eine Hauptleitung, durch welche das Waschwasser 7 mit einem von der Pumpe 3.1 erzeugten Druck p1 in einer Durchflussrichtung DF zu dem Bürstenkopf 8 gepumpt wird. Der Betriebsdruck p1 liegt dabei in einem Bereich von 5 bis 350 bar.

Die Hauptleitung 2.1 weist zudem einen austrittsöffnungsseitigen Abschnitt 13 auf. Ist die gesamte Hauptleitung 2.1 in zwei Hälften unterteilt, wobei die erste Hälfte der Hauptleitung 2.1 in Durchflussrichtung DF bei dem Fluidreservoir 4 liegt, ist die zweite Hälfte der Hauptleitung 2.1 als der austrittsöffnungsseitige Abschnitt 13 definiert.

Die Leitung 2.2 stellt eine Nebenleitung dar, die im Wesentlichen parallel zur Hauptleitung 2.1 verlegt ist. Dabei wird im Frostschutzmodus der Selbstbedienungs-Waschanlage durch eine Pumpe 3.2 mit einem Druck p2, der ein Niederdruck ist, durch die Nebenleitung 2.2 gepumpt. Die Nebenleitung 2.2 stellt daher eine Niederdruckleitung dar. Der Niederdruck p2 liegt dabei in einem Bereich von 0,5 bis 4 bar.

In der Niederdruckleitung 2.2 ist ein Sperrelement 5 angeordnet. Das Sperrelement 5 ist dabei als Rückschlagventil ausgestaltet. Das Rückschlagventil 5 ist dabei derart in der Niederdruckleitung 2.2 angeordnet, dass sich ein Ventilkörper, z.B. eine Klappe, des Rückschlagventils 5 in Richtung der Hauptleitung 2.1 öffnet. Im Waschmodus wird durch den Hochdruck p1 in der Hauptleitung 2.1 das Rückschlagventil 5 in eine geschlossene Stellung gedrückt, so dass aus der Hauptleitung 2.1 kein Waschwasser 7 in die Niederdruckleitung 2.2 gelangt. Das Waschwasser 7 aus der Hauptleitung 2.1 kann somit uneingeschränkt zum Reinigen eines Fahrzeugs verwendet werden.

Weiterhin umfasst die Frostschutzvorrichtung 1 eine Zuflussstelle 12. An der Zuflussstelle 12 mündet der Wasserfluss im Frostschutzmodus aus der Niederdruckleitung 2.2 in die Hauptleitung 2.1. Die Zuflussstelle 12 ist zudem in Durchflussrichtung DF im hinteren Drittel der Hauptleitung 2.1 angeordnet.

In der Durchflussrichtung DF hinter der Zuflussstelle 12 ist ein zweites Sperrelement 6 in der Hauptleitung 2.1 angeordnet. Das Sperrelement 6 ist dabei als Absperrventil ausgestaltet. Mit dem Absperrventil 6 kann der Waschwasserfluss, welcher von der Pumpe 3.1 in der Hauptleitung 2.1 erzeugt wird, gestoppt werden. Das Absperrventil 6 kann dabei beispielsweise manuell vom Nutzer verschlossen werden. Alternativ kann das Absperrventil 6 automatisch geschlossen werden, wenn ein Guthaben, welches von einem Nutzer zum Bezahlen des Waschvorgangs aufgewendet wird, verbraucht ist. Das Absperrventil 6 ist in einem solchen Fall mit der Pumpe 3.1 gekoppelt, so dass diese automatisch abgeschaltet wird, wenn das Absperrventil 6 geschlossen wird. Alternativ kann das Absperrventil auch dann geschlossen werden, wenn erfasst wurde, dass die Pumpe 3.1 ihren Betrieb eingestellt hat und somit kein Fluid 7 mehr zu den Austrittsöffnungen 11 des Bürstenkopfes gepumpt wird.

Dadurch, dass im Frostschutzmodus der Waschwasserfluss zu dem Bürstenkopf 8 gestoppt wird, kann das sich in Durchflussrichtung DF hinter dem Absperrventil 6 befindliche restliche Waschwasser 7 im Wesentlichen restlos aus dem Bürstenkopf 8 laufen. Bei einer Wiederverwendung des Bürstenkopfes 8 durch den gleichen oder einen nachfolgenden Nutzer kann das Risiko, dass dieser von in dem Bürstenkopf 8 verbliebenem Restwasser nass wird, vermindert werden.

Ist die erste Pumpe 3.1 abgeschaltet, wird die Selbstbedienungs-Waschanlage im Frostschutzmodus, betrieben. Es liegt dann zunächst kein Druck p1 mehr an der Hauptleitung 2.1 an.

Der an der Niederdruckleitung 2.2 anliegende Niederdruck p2 sorgt dann dafür, dass das Rückschlagventil 5 in Richtung der Hauptleitung 2.1 geöffnet wird. Das Waschfluid 7 aus der Niederdruckleitung 2.2 strömt in die Hauptleitung 2.1. Durch das Absperrventil 6 ist der Weg in Durchflussrichtung DF zu dem Bürstenkopf 8 versperrt. Das Waschwasser 7 wird daher vollständig in die Rückflussrichtung DF', die entgegengesetzt zur Durchflussrichtung DF ausgerichtet ist, aus der Hauptleitung 2.1 in den Wassertank 4 gedrückt. Aus dem Wassertank 4 wird dabei ständig Waschwasser 7 mittels der Pumpe 3.2 in die Niederdruckleitung 2.2 gepumpt, welches von der Hauptleitung 2.1 wieder in den Wassertank 4 zurückgeführt wird. Hierzu weist die Hauptleitung 2.1 bei der Pumpe 3.1 eine Bypass-Leitung 14 auf, durch welche das Wasser in die Rückflussrichtung DF', die entgegengesetzt zu der Durchflussrichtung DF ausgerichtet ist an der Pumpe 3.1 vorbei zurück in das Fluidreservoir 4 geleitet wird. Gegebenenfalls kann in der Bypass-Leitung 14 ein weiteres Ventil angeordnet sein, dass im Waschbetrieb einen Fluidfluss in der Bypass-Leitung 14 verhindert. Alternativ kann die Pumpe 3.1 auch in Gegenrichtung durchströmt werden.

Wenn in der Bypass-Leitung 14 ein weiteres Ventil angeordnet ist, verhindert dieses im Betriebsmodus einen Fluidfluss von der stromaufwärtigen Seite der ersten Pumpe 3.1 durch die Bypass-Leitung 14 zurück in den Wassertank 4. Beispielsweise ist das weitere Ventil elektrisch betätigbar. Um auch im Fehlerfall den Frostschutz sicher zu stellen, ist in diesem Fall das weitere Ventil so ausgeführt, dass es im Normalzustand in einem geöffneten Zustand ist. Im Betriebsmodus wird es dann elektrisch so angesteuert, dass es in den geschlossenen Zustand versetzt wird.

Gemäß einer anderen Ausgestaltung ist das weitere Ventil ein mechanisches Ventil. Es weist einen Ventilkörper auf, durch dessen Bewegung das weitere Ventil in einen geöffneten und einen geschlossenen Zustand versetzbar ist. Im undurchströmten Zustand des weiteren Ventils wirkt auf dessen Ventilkörper durch eine Feder eine Kraft, welche den Ventilkörper in Richtung des geöffneten Zustands drückt. Im durchströmten Zustand wird der Ventilkörper durch die Anströmung des Waschwasser 7 in den geschlossenen Zustand versetzt, wenn der Volumenstrom einen Grenzwert überschreitet. Der Grenzwert wird dabei so gewählt, dass sich aus dem Volumenstrom der ersten Pumpe 3.1, sobald diese in Betrieb gesetzt wird, eine so starke Anströmung ergibt, dass das weitere Ventil in den geschlossenen Zustand versetzt wird. Im Frostschutzmodus ergibt sich hingegen durch die Förderung der zweiten Pumpe 3.2 eine deutlich geringere Anströmung des Ventilkörpers des weiteren Ventils. Bei einem solchen Volumenstrom im Frostschutzmodus, der beispielsweise ein Zehntel des Volumenstroms im Betriebsmodus ist, verbleibt das weitere Ventil im geöffneten Zustand.

Hierdurch entsteht im Frostschutzmodus ein geschlossener Kreislaufbetrieb. Die Hauptleitung 2.1 wird kontinuierlich von Waschwasser 7 durchströmt. Dadurch kann ein Einfrieren der Hauptleitung 2.1 verhindert werden, auch wenn sich diese nicht im Waschbetrieb befindet. Zudem geht dabei kein Waschwasser 7 verloren, wodurch der Frostschutzbetrieb auf kostengünstige Art und Weise hergestellt werden kann.

In einer ersten Weiterbildung kann in Durchflussrichtung DF vor der ersten Pumpe 3.1 eine Dosiereinrichtung 15 angeordnet sein. Die Dosiereinrichtung 15 dosiert dem Waschwasser 7 im Waschmodus Chemikalien zu.

In einer zweiten Weiterbildung der erfindungsgemäßen Frostschutzvorrichtung 6 ist in Durchflussrichtung DF hinter der Pumpe 3.2 eine Heizvorrichtung 10 angeordnet. Beim Durchströmen der Heizvorrichtung 10 wird das Waschwasser 7 zusätzlich aufgewärmt. Durch die Hauptleitung 2.1 wird daher im Frostschutzbetrieb erwärmtes Wasser 7 entgegengesetzt zu der Durchflussrichtung DF gedrückt.

In einer dritten Weiterbildung der erfindungsgemäßen Frostschutzvorrichtung 1 werden die Hauptleitung 2.1 und die Niederdruckleitung 2.2 thermisch miteinander gekoppelt. Hierzu wird die Niederdruckleitung 2.2 direkt an der Hauptleitung 2.1 befestigt, so dass die beiden Leitungen 2.1 und 2.2 in physischem Kontakt miteinander stehen. Hierdurch kann die Niederdruckleitung 2.2 bereits im Waschmodus ihre Wärme, die von dem in ihr befindlichen erwärmten Wasser erzeugt wird, an die Hauptleitung 2.1 weitergeben. Zudem können die beiden thermisch gekoppelten Leitungen 2.1 und 2.2 noch mit einem Isoliermaterial umwickelt werden, so dass so wenig Temperatur wie möglich an die Umgebungsluft abgegeben wird.

Weiterhin wird mit Bezug zu den Figuren 1 und 2 ein Ausführungsbeispiel für das erfindungsgemäße Frostschutzverfahren erläutert, welches einen Wechsel von einem Waschmodus in den Frostschutzmodus betrifft und welches im vorliegenden Ausführungsbeispiel von der Frostschutzvorrichtung 1 ausgeführt wird.

Hierzu wird als Ausgangssituation die Frostschutzvorrichtung 1 in einem Waschmodus betrieben. In dem Waschmodus wird das Waschwasser 7 von dem Fluidreservoir 4 von der Pumpe 3.1 unter Druck p1 durch das geöffnete Absperrventil 6 zu den Austrittsöffnungen 11 des Bürstenkopfes 8 durch die Hauptleitung 2.1 befördert. Der Wasserfluss durch das Absperrventil 6 ist dabei durch den Pfeil f1 angedeutet. Ein Wasserfluss durch das Rückschlagventil 5 im Waschmodus findet dabei weder in Richtung der Niederdruckleitung 2.2 noch in Richtung der Hauptleitung 2.1 statt. Dies ist durch die Pfeile f2 und f3 angedeutet. Weiterhin wird auch durch die Bypass-Leitung im Waschmodus kein Wasser 7 befördert. Dies ist durch die Pfeil f5 angedeutet.

Wird der Waschmodus beendet, wird die Pumpe 3.1 ausgeschaltet. Dies bedeutet, dass sich der Druck p1 auf null verringert. Von der Pumpe 3.1 wird kein Wasser 7 mehr in die Hauptleitung 2.1 befördert.

Hierdurch fällt der Druck p1 in der Hauptleitung 2.1 im Wesentlichen auf null. Das Rückschlagventil 5 öffnet sich. Das Fluid aus der Niederdruckleitung 2.2 wird in die Hauptleitung 2.1 mit dem Druck p2 gepumpt, so dass im Frostschutzbetrieb an der Hauptleitung 2.1 der Niederdruck p2 anliegt. Das Waschwasser 7 wird durch die Bypass-Leitung 14 in das Fluidreservoir 4 rückgeführt. Dies ist durch den Pfeil f6 angedeutet.

Weiterhin wird bei dem Wechsel von dem Waschmodus in den Frostschutzmodus das Absperrventil 6 geschlossen, so dass gewährleistet werden kann, dass so wenig Waschwasser 7 wie möglich verloren geht.

Die Selbstbedienungs-Waschanlage wird solange im Frostschutzmodus betrieben, bis ein Nutzer erneut die Behandlungseinrichtung 9 verwendet. Im Frostschutzmodus ist das Absperrventil 6 geschlossen, so dass kein Fluid zu den Austrittsöffnungen 11 des Bürstenkopfes 8 befördert wird. Dies ist durch den Pfeil f1' angedeutet. Ein Fluidfluss durch das Rückschlagventil 5 im Waschmodus findet dabei in Richtung der Hauptleitung 2.1 statt. Dies ist durch den Pfeil f4 angedeutet.

Bei einem Wechsel von einem Frostschutzmodus in den Waschmodus wird die Pumpe 3.1 wieder eingeschaltet, so dass das Fluid 7 aus dem Fluidreservoir 4 mit dem Druck p1 in die Hauptleitung 2.1 gepumpt wird. Der im Frostschutzmodus an der Hauptleitung 2.1 anliegende Druck p2 wird erhöht. Dadurch wird das Rückschlagventil 5 geschlossen, so dass kein Wasser mehr von der Niederdruckleitung 2.2 in die Hauptleitung 2.1 gelangen kann. Weiterhin kann auch kein Wasser 7 von der Hauptleitung 2.1 in die Niederdruckleitung 2.2 gelangen. Zudem wird das Waschwasser 7 wieder in Durchflussrichtung DF durch die Hauptleitung 2.1 befördert.

Weiterhin wird bei dem Wechsel von dem Frostschutzmodus in den Waschmodus das Absperrventil 6 wieder geöffnet, so dass das Wasser 7 zu den Austrittsöffnungen 11 transportiert werden kann.

### Bezugszeichenliste

- 1: Frostschutzvorrichtung
- 2.1: erste Leitung; Hauptleitung;
- 2.2: zweite Leitung; Nebenleitung; Niederdruckleitung
- 2.2': Abschnitt der zweiten Leitung
- 3.1: erste Pumpe
- 3.2: zweite Pumpe
- 4: Fluidreservoir-Anordnung; Fluidreservoir; Wassertank
- 5: erstes Sperrelement; Rückschlagventil
- 6: zweites Sperrelement; Absperrventil
- 7: Fluid; Waschwasser
- 8: Bürstenkopf
- 9: Behandlungseinrichtung; Waschbürste
- 10: Heizvorrichtung
- 11: Austrittsöffnung
- 12: Zuflussstelle
- 13: austrittsöffnungsseitiger Abschnitt
- 14: Bypass-Leitung
- 15: Dosiereinrichtung
- DF: Durchflussrichtung
- DF': Durchflussrichtung
- f1 - f6, f1': Fluidflüsse
- p1: erster Druck; Betriebsdruck
- p2: zweiter Druck; Niederdruck

## Patentansprüche

1. Frostschutzvorrichtung (1) für eine Fahrzeug-Behandlungsanlage, mit
einer Fluidreservoir-Anordnung (4) zur Aufnahme eines Fluids (7),
einer Behandlungseinrichtung (9), welche eine Austrittsöffnung (11) für das Fluid (7) aufweist,
einer ersten Leitung (2.1), welche eine Fluidverbindung von der Fluidreservoir-Anordnung (4) in einer Durchflussrichtung (DF) zu der Austrittsöffnung (11) bereitstellt,
einer ersten Pumpe (3.1), mittels welcher das Fluid (7) in einem Betriebsmodus mit einem ersten Druck (p1) von der Fluidreservoir-Anordnung (4) in die erste Leitung (2.1) förderbar ist,
einer zweiten Leitung (2.2), welche eine Fluidverbindung von der Fluidreservoir-Anordnung (4) zu einem austrittsöffnungsseitigen Abschnitt (13) der ersten Leitung (2.1) bereitstellt, wobei in der zweiten Leitung (2.2) ein erstes Sperrelement (5) angeordnet ist,
einer zweiten Pumpe (3.2), mittels welcher das Fluid (7) mit einem zweiten Druck (p2) in die zweite Leitung (2.2) förderbar ist,
**dadurch gekennzeichnet, dass**
das erste Sperrelement (5) derart ausgestaltet ist, dass es in einem Frostschutzmodus, in welchem der zweite Druck (p2) größer ist als der erste Druck (p1), geöffnet ist, so dass das Fluid (7) aus der zweiten Leitung (2.2) in die erste Leitung (2.1) eintritt und zumindest teilweise durch die erste Leitung (2.1) entgegengesetzt zu der Durchflussrichtung (DF') in die Fluidreservoir-Anordnung (4) rückführbar ist.

2. Frostschutzvorrichtung (1) nach Anspruch 1,
**dadurch gekennzeichnet, dass**
die Frostschutzvorrichtung (1) eine Zuflussstelle (12) bei dem austrittsöffnungsseitigen Abschnitt (13) der ersten Leitung (2.1) aufweist, bei welcher im Frostschutzmodus das Fluid (7) aus der zweiten Leitung (2.2) in die erste Leitung (2.1) strömt, und
das erste Sperrelement (5) benachbart zu der Zuflussstelle (12) angeordnet ist und derart ausgestaltet ist, dass es in dem Betriebsmodus, in dem der zweite Druck (p2) kleiner ist als der erste Druck (p1), geschlossen ist, so dass das Fluid (7) aus der ersten Leitung (2.1) nicht in die zweite Leitung (2.2) eintritt.

3. Frostschutzvorrichtung (1) nach Anspruch 1 oder 2 ,
**dadurch gekennzeichnet, dass**
die Behandlungseinrichtung (9) als Handlanze ausgebildet ist und die Zuflussstelle (12) in der Handlanze angeordnet ist.

4. Frostschutzvorrichtung (1) nach einem der Ansprüche 2 oder 3,
**dadurch gekennzeichnet, dass**
in der ersten Leitung (2.1) in Durchflussrichtung (DF) hinter der Zuflussstelle (12) ein zweites Sperrelement (6) angeordnet ist, welches im Frostschutzmodus geschlossen ist, so dass das Fluid (7) nicht in einen in Durchflussrichtung (DF) hinter dem zweiten Sperrelement (6) gelegenen Abschnitt (2.1') der ersten Leitung (2.1) eintritt.

5. Frostschutzvorrichtung (1) nach Anspruch 4,
**dadurch gekennzeichnet, dass**
die Zuflussstelle eine Mündung ist, bei der die zweite Leitung (2.2) in die erste Leitung (2.1) mündet und bei der die erste (2.1) und die zweite Leitung (2.2) mittels eines Verbindungselements miteinander verbunden sind, wobei das Verbindungselement das erste (5) und das zweite Sperrelement (6) aufweist.

6. Frostschutzvorrichtung (1) nach Anspruch 4 oder 5,
**dadurch gekennzeichnet, dass**
das zweite Sperrelement (6) dadurch bereitgestellt wird, dass ein Ventilkörper des ersten Sperrelementes (5) bei einem Öffnen des ersten Sperrelementes (5) den Fluidfluss durch die erste Leitung (2.1) in Richtung der Austrittsöffnung (11) blockiert.

7. Frostschutzvorrichtung (1) nach einem der vorhergehenden Ansprüche,
**dadurch gekennzeichnet, dass**
die erste Leitung (2.1) bei der ersten Pumpe (3.1) eine Bypass-Leitung (14) aufweist, durch welche das Fluid (7) entgegengesetzt zu der Durchflussrichtung (DF) an der ersten Pumpe (3.1) vorbei in die Fluidreservoir-Anordnung (4) geleitet wird.

8. Frostschutzvorrichtung (1) nach Anspruch 7,
**dadurch gekennzeichnet, dass**
in der Bypass-Leitung (14) ein weiteres Ventil angeordnet ist, dass im Betriebsmodus einen Fluidfluss von der stromaufwärtigen Seite der ersten Pumpe (3.1) durch die Bypass-Leitung (14) zurück in die Fluidreservoir-Anordnung (4) verhindert.

9. Frostschutzvorrichtung (1) nach Anspruch 8,
**dadurch gekennzeichnet, dass**
das weitere Ventil ein mechanisches Ventil mit einem Ventilkörper ist, durch dessen Bewegung das weitere Ventil in einen geöffneten und einen geschlossenen Zustand versetzbar ist,
wobei im undurchströmten Zustand des weiteren Ventils auf dessen Ventilkörper durch eine Feder eine Kraft wirkt, welche den Ventilkörper in Richtung des geöffneten Zustands drückt, und
wobei im durchströmten Zustand des weiteren Ventils dessen Ventilkörper durch die Anströmung des Fluids (7) in den geschlossenen Zustand versetzt wird, wenn der Volumenstrom einen Grenzwert überschreitet.

10. Frostschutzvorrichtung (1) nach einem der vorhergehenden Ansprüche,
**dadurch gekennzeichnet, dass**
die erste Leitung (2.1) und die zweite Leitung (2.2) thermisch gekoppelt und von ihrer Umgebung thermisch isoliert sind.

11. Frostschutzvorrichtung (1) nach Anspruch 10,
**dadurch gekennzeichnet, dass**
die thermische Kopplung so ausgebildet ist, dass die Wärmeleitfähigkeit von einer (2.2) der beiden Leitungen (2.1, 2.1) zu der anderen (2.1) der beiden Leitungen (2.1, 2.1) größer ist als die Wärmeleitfähigkeit von der einen Leitung (2.2) in die Umgebung.

12. Frostschutzverfahren für eine Fahrzeug-Behandlungsanlage, bei dem
in einem Betriebsmodus ein Fluid (7) aus einer Fluidreservoir-Anordnung (4) durch eine erste Leitung (2.1) in eine Durchflussrichtung (DF) zu einer Austrittsöffnung (11) einer Behandlungseinrichtung (9) mit einem ersten Druck (p1) gepumpt wird, **dadurch gekennzeichnet, dass**
in einem Frostschutzmodus der erste Druck (p1) verringert wird und das Fluid (7) aus der Fluidreservoir-Anordnung (4) in eine zweite Leitung (2.2) mit einem zweiten Druck (p2), der größer als der verringerte erste Druck (p1) ist, gepumpt wird, wobei das Fluid (7) von der zweiten Leitung (2.2) durch ein in der zweiten Leitung (2.2) angeordnetes Sperrelement (5) bei einem austrittsöffnungsseitigen Abschnitt (13) der ersten Leitung (2.1) in diese eintritt und zumindest teilweise entgegengesetzt zu der Durchflussrichtung (DF) durch die erste Leitung (2.1) in die Fluidreservoir-Anordnung (4) rückgeführt wird, wobei das Sperrelement (5) öffnet, wenn der zweite Druck (p2) größer ist als der erste Druck (p1).

13. Frostschutzverfahren nach Anspruch 12,
**dadurch gekennzeichnet, dass**
der erste Druck (p1) im Betriebsmodus höher als der der zweite Druck (p2) ist.

14. Frostschutzverfahren nach Anspruch 12 oder 13,
**dadurch gekennzeichnet, dass**
im Frostschutzmodus beim Rückführen des Fluids (7) das Fluid (7) entgegengesetzt zu der Durchflussrichtung (DF) über eine Bypass-Leitung (14) an der ersten Pumpe (3.1) vorbei in die Fluidreservoir-Anordnung (4) geleitet wird.

15. Frostschutzverfahren nach einem der Ansprüche 12 bis 14,
**dadurch gekennzeichnet, dass**
beim Öffnen des ersten Sperrelementes (5) ein Ventilkörper des ersten Sperrelementes (5) den Fluidfluss durch die erste Leitung (2.1) in Richtung der Austrittsöffnungen (11) blockiert.

## Claims

1. Freezing protection device (1) for a vehicle treatment system, having
a fluid reservoir arrangement (4) for receiving a fluid (7),
a treatment device (9) which has an outlet opening (11) for the fluid (7),
a first conduit (2.1) which provides a fluid connection from the fluid reservoir arrangement (4) in a flow direction (DF) to the outlet opening (11),
a first pump (3.1), by means of which the fluid (7) can be conveyed in an operating mode with a first pressure (p1) from the fluid reservoir arrangement (4) into the first conduit (2.1),
a second conduit (2.2) which provides a fluid connection from the fluid reservoir arrangement (4) to a section (13) of the first conduit (2.1) on the outlet opening side, wherein a first blocking element (5) is arranged in the second conduit (2.2),
a second pump (3.2), by means of which the fluid (7) can be conveyed into the second conduit (2.2) with a second pressure (p2),
**characterised in that**
the first blocking element (5) is designed in such a way that it is opened in a freezing protection mode, in which the second pressure (p2) is greater than the first pressure (p1), such that the fluid (7) from the second conduit (2.2) enters the first conduit (2.1) and can be at least partially returned to the fluid reservoir arrangement (4) through the first conduit (2.1) against the flow direction (DF').

2. Freezing protection device (1) according to claim 1,
**characterised in that**
the freezing protection device (1) has an inflow point (12) at the section (13) of the first conduit (2.1) on the outlet opening side, at which the fluid (7) flows out of the second conduit (2.2) into the first conduit (2.1) in the freezing protection mode, and the first blocking element (5) is arranged adjacently to the inflow point (12) and is designed in such a way that it is closed in the operating mode, in which the second pressure (p2) is less than the first pressure (p1), such that the fluid (7) from the first conduit (2.1) does not enter the second conduit (2.2).

3. Freezing protection device (1) according to claim 1 or 2,
**characterised in that**
the treatment device (9) is designed as a hand lance, and the inflow point (12) is arranged in the hand lance.

4. Freezing protection device (1) according to one of claims 2 or 3,
**characterised in that**
a second blocking element (6) is arranged behind the inflow point (12) in the first conduit (2.1) in the flow direction (DF), which second blocking element is closed in the freezing protection mode, such that the fluid (7) does not enter a section (2.1') of the first conduit (2.1) located behind the second blocking element (6) in the flow direction (DF).

5. Freezing protection device (1) according to claim 4,
**characterised in that**
the inflow point is an opening at which the second conduit (2.2) leads into the first conduit (2.1) and at which the first (2.1) and the second conduit (2.2) are connected to each other by means of a connecting element, wherein the connecting element has the first (5) and the second blocking element (6).

6. Freezing protection device (1) according to claim 4 or 5,
**characterised in that**
the second blocking element (6) is provided **in that** a valve body of the first blocking element (5) blocks the fluid flow through the first conduit (2.1) in the direction of the outlet opening (11) when the first blocking element (5) is opened.

7. Freezing protection device (1) according to one of the preceding claims,
**characterised in that**
the first conduit (2.1) has a bypass conduit (14) at the first pump (3.1), through which bypass conduit the fluid (7) is led into the fluid reservoir arrangement (4) against the flow direction (DF) past the first pump (3.1).

8. Freezing protection device (1) according to claim 7,
**characterised in that**
a further valve is arranged in the bypass conduit (14), which prevents a fluid flow from the upstream side of the first pump (3.1) through the bypass conduit (14) back into the fluid reservoir arrangement (4) in the operating mode.

9. Freezing protection device (1) according to claim 8,
**characterised in that**
the further valve is a mechanical valve having a valve body, the movement of which can shift the further valve into an open and a closed state,
wherein, in the state in which the further valve is not flowed through, a force acts on its valve body by means of a spring, which force pushes the valve body in the direction of the open state, and
wherein, in the state in which the further valve is flowed through, its valve body is moved into the closed state by the inflow of the fluid (7) when the volume flow exceeds a limit value.

10. Freezing protection device (1) according to one of the preceding claims,
**characterised in that**
the first conduit (2.1) and the second conduit (2.2) are thermally coupled and are thermally insulated from their surroundings.

11. Freezing protection device (1) according to claim 10,
**characterised in that**
the thermal coupling is formed in such a way that the thermal conductivity from one (2.2) of the two conduits (2.1, 2.1) to the other (2.1) of the two conduits (2.1, 2.1) is greater than the thermal conductivity from the one conduit (2.2) to the surroundings.

12. Freezing protection method for a vehicle treatment system, in which,
in an operating mode, a fluid (7) is pumped from a fluid reservoir arrangement (4) through a first conduit (2.1) in a flow direction (DF) to an outlet opening (11) of a treatment device (9) with a first pressure (p1), **characterised in that**,
in a freezing protection mode, the first pressure (p1) is reduced and the fluid (7) is pumped from the fluid reservoir arrangement (4) into a second conduit (2.2) with a second pressure (p2) which is greater than the reduced first pressure (p1), wherein the fluid (7) from the second conduit (2.2) enters the first conduit (2.1) through a blocking element (5) arranged in the second conduit (2.2) at a section (13) of the first conduit (2.1) which is on the outlet opening side, and is guided back through the first conduit (2.1) into the fluid reservoir arrangement (4) at least partially against the flow direction (DF), wherein the blocking element (5) opens when the second pressure (p2) is greater than the first pressure (p1).

13. Freezing protection method according to claim 12,
**characterised in that**,
in the operating mode, the first pressure (p1) is higher than the second pressure (p2).

14. Freezing protection method according to claim 12 or 13,
**characterised in that**,
in the freezing protection mode, when the fluid (7) is being returned, the fluid (7) is guided past the first pump (3.1) into the fluid reservoir arrangement (4) against the flow direction (DF) via a bypass conduit (14).

15. Freezing protection method according to one of claims 12 to 14,
**characterised in that**,
when the first blocking element (5) is opened, a valve body of the first blocking element (5) blocks the fluid flow through the first conduit (2.1) in the direction of the outlet openings (11).

## Revendications

1. Dispositif de protection antigel (1) pour une installation de traitement de véhicules, avec
un ensemble réservoir de fluide (4) permettant la réception d'un fluide (7),
un dispositif de traitement (9), lequel présente un orifice de sortie (11) pour le fluide (7),
une première conduite (2.1), laquelle établit une liaison fluidique de l'ensemble réservoir de fluide (4) dans une direction d'écoulement (DF) jusqu'à l'orifice de sortie (11,
une première pompe (3.1), au moyen de laquelle le fluide (7) peut être transporté dans un mode de fonctionnement avec une première pression (p1) de l'ensemble réservoir de fluide (4) dans la première conduite (2.1),
une deuxième conduite (2.2), laquelle établit une liaison fluidique de l'ensemble réservoir de fluide (4) vers un segment du côté orifice de sortie (13) de la première conduite (2.1), où un premier élément de blocage (5) est disposé dans la deuxième conduite (2.2),
une deuxième pompe (3.2) au moyen de laquelle le fluide (7) peut être transporté avec une deuxième pression (p2) dans la deuxième conduite (2.2),
**caractérisé en ce que**
le premier élément de blocage (5) est conçu de telle manière que, dans un mode de protection antigel, dans lequel la deuxième pression (p2) est réglée ouverte, supérieure à la première pression (p1), de sorte que le fluide (7) va de la deuxième conduite (2.2) en entrant dans la première conduite (2.1) et peut être au moins partiellement retourné par la première conduite (2.1) dans le sens opposé à la direction d'écoulement (DF') dans l'ensemble réservoir de fluide (4).

2. Dispositif de protection antigel (1) selon la revendication 1,
**caractérisé en ce que**
le dispositif de protection antigel (1) présente un point de confluence (12) près du segment du côté orifice de sortie (13) de la première conduite (2.1), près duquel le fluide (7), dans le mode de protection antigel, s'écoule hors de la deuxième conduite (2.2) dans la première conduite (2.1), et
le premier élément de blocage (5) est disposé au voisinage du point de confluence (12) et est conçu de telle manière qu'il est fermé dans le mode de fonctionnement, dans lequel la deuxième pression (p2) est inférieure à la première pression (p1), de sorte que le fluide (7) ne va pas de la première conduite (2.1) pour entrer dans la deuxième conduite (2.2).

3. Dispositif de protection antigel (1) selon la revendication 1 ou la revendication 2,
**caractérisé en ce que**
le dispositif de traitement (9) est conçu sous forme d'une lance manuelle et le point de confluence (12) est disposé dans la lance manuelle.

4. Dispositif de protection antigel (1) selon l'une des revendications 2 ou 3,
**caractérisé en ce que,**
dans la première conduite (2.1), dans le sens de l'écoulement (DF), un deuxième élément de blocage (6) est disposé derrière le point de confluence (12), lequel est fermé dans le mode de protection antigel de sorte que le fluide (7) ne pénètre pas dans un segment (2.1') de la première conduite (2.1) situé dans le sens de l'écoulement (DF) derrière le deuxième élément de blocage (6).

5. Dispositif de protection antigel (1) selon la revendication 4,
**caractérisé en ce que**
le point de confluence est une embouchure, près de laquelle la deuxième conduite (2.2) débouche dans la première conduite (2.1) et chez laquelle la première (2.1) et la deuxième conduite (2.2) sont reliées l'une à l'autre au moyen d'un élément de liaison, où l'élément de liaison présente le premier (5) et le deuxième élément de blocage (6).

6. Dispositif de protection antigel (1) selon la revendication 4 ou la revendication 5,
**caractérisé en ce que**
le deuxième élément de blocage (6) est créé par le fait qu'un corps de soupape du premier élément de blocage (5) bloque l'écoulement du fluide par la première conduite (2.1) en direction de l'orifice de sortie (11) lors de l'ouverture du premier élément de blocage (5).

7. Dispositif de protection antigel (1) selon l'une des revendications précédentes,
**caractérisé en ce que**
la première conduite (2.1) présente une conduite de dérivation (14) près de la première pompe (3.1), par laquelle le fluide (7) est mené dans le sens opposé au sens de l'écoulement (DF) en passant à côté de la première pompe (3.1) vers l'ensemble réservoir de fluide (4).

8. Dispositif de protection antigel (1) selon la revendication 7,
**caractérisé en ce**
**qu'**une nouvelle soupape est disposée dans la conduite de dérivation (14), qui, dans le mode de fonctionnement, empêche un écoulement de fluide du côté amont de la première pompe (3.1) par la conduite de dérivation (14) de retour dans l'ensemble réservoir de fluide (4).

9. Dispositif de protection antigel (1) selon la revendication 8,
**caractérisé en ce que**
la nouvelle soupape est une soupape mécanique avec un corps de soupape, par le déplacement duquel la nouvelle soupape peut être mise dans un état ouvert et un état fermé,
dans lequel, dans l'état non sollicité de la nouvelle soupape, une force agit sur son corps de soupape par un ressort, laquelle presse le corps de soupape en direction de l'état ouvert, et
dans lequel, dans l'état sollicité de la nouvelle soupape, son corps de soupape est déplacé dans l'état fermé par l'écoulement du fluide (7), lorsque le débit volumique dépasse une valeur de seuil.

10. Dispositif de protection antigel (1) selon l'une des revendications précédentes,
**caractérisé en ce que**
la première conduite (2.1) et la deuxième conduite (2.2) sont couplées thermiquement et sont isolées thermiquement de leur environnement.

11. Dispositif de protection antigel (1) selon la revendication 10,
**caractérisé en ce que**
le couplage thermique est conçu de telle manière que la conductibilité thermique de l'une (2.2) des deux conduites (2.1, 2.1) par rapport à l'autre (2.1) parmi les deux conduites (2.1, 2.1) est supérieure à la conductibilité thermique de la conduite (2.2) dans l'environnement.

12. Procédé de protection antigel pour une installation de traitement de véhicules, chez lequel
dans un mode de fonctionnement, un fluide (7) est pompé à partir d'un ensemble réservoir de fluide (4) par une première conduite (2.1) dans un sens d'écoulement (DF) jusqu'à un orifice de sortie (11) d'un dispositif de traitement (9) avec une première pression (p1),
**caractérisé en ce que,**
dans un mode de protection antigel, la première pression (p1) est diminuée et le fluide (7) est pompé à partir de l'ensemble réservoir de fluide (4) dans une deuxième conduite (2.2) avec une deuxième pression (p2) qui est supérieure à la première pression (p1) diminuée, où le fluide (7) va de la deuxième conduite (2.2), en traversant un élément de blocage (5) disposé dans la deuxième conduite (2.2), entre dans celle-ci près d'un segment (13) du côté de l'orifice de sortie de la première conduite (2.1) et est ramenée au moins partiellement dans le sens opposé par rapport au sens d'écoulement (DF) à travers la première conduite (2.1) dans l'ensemble réservoir de fluide (4), où l'élément de blocage (5) s'ouvre lorsque la deuxième pression (p2) est supérieure à la première pression (p1).

13. Procédé de protection antigel selon la revendication 12,
**caractérisé en ce que**
la première pression (p1) dans le mode de fonctionnement est supérieure à la deuxième pression (p2).

14. Procédé de protection antigel selon la revendication 12 ou la revendication 13,
**caractérisé en ce que,**
dans le mode de protection antigel, lors du recyclage du fluide (7), le fluide (7) est mené dans le sens opposé par rapport au sens d'écoulement (DF), par le biais d'une conduite de dérivation (14), en passant devant la première pompe (3.1) vers l'ensemble réservoir de fluide (4).

15. Procédé de protection antigel selon l'une des revendications 12 à 14,
**caractérisé en ce que,**
lors de l'ouverture du premier élément de blocage (5), un corps de soupape du premier élément de blocage (5) bloque l'écoulement de fluide à travers la première conduite (2.1) en direction des orifices de sortie (11).
